# EUROPÄISCHE PATENTSCHRIFT

(11) **EP 3 323 376 B1**
(45) Veröffentlichungstag und Bekanntmachung des Hinweises auf die Patenterteilung: **17.07.2019**
(21) Anmeldenummer: 16199840.6
(22) Anmeldetag: 21.11.2016
(51) Int. Cl.: A61C 3/02, A61C 1/14

(54) **DENTALINSTRUMENT UND ADAPTER DAFÜR**
DENTAL INSTRUMENT AND ADAPTER FOR THE SAME
INSTRUMENT DENTAIRE ET ADAPTATEUR ASSOCIÉ

(43) Veröffentlichungstag der Anmeldung: 23.05.2018
(73) Patentinhaber: Hager & Meisinger GmbH, 41468 Neuss (DE)
(72) Erfinder: Mandl, Dominik, 41462 Neuss (DE); Moser, Walter, 5018 Erlinsbach (CH)
(74) Vertreter: Lenzing Gerber Stute

(56) Entgegenhaltungen:
- WO-A1-2012/126957
- CH-A1- 706 593
- DE-A1- 3 843 465
- DE-A1- 19 516 034
- DE-A1- 19 749 597
- DE-U1-202005 020 873

## Beschreibung

Die vorliegende Erfindung betrifft ein Dentalinstrument zur Verbindung mit einer bzw. einem mindestens einen Vorsprung aufweisenden Antriebsvorrichtung oder Adapter mit einem in die Antriebsvorrichtung oder den Adapter einspannbaren Schaft sowie mit einem Arbeitskopf, der insbesondere Schneiden und/oder mindestens eine abrasive Oberfläche aufweist, wobei das Dentalinstrument eine Rotationsachse aufweist und der Schaft an seinem dem Kopf abgewandten Endbereich einen seitlich abgeflachten Bereich und eine Mantelfläche aufweist, und wobei die Mantelfläche mindestens eine sich in axialer Richtung erstreckende Längsnut aufweist.

Derartige Dentalinstrumente sind bekannt, wobei der abgeflachte Bereich zur Übertragung eines Antriebsmomentes dient. Da derartige Dentalinstrumente meist sehr filigran sind, d.h. einen international etablierten Durchmesser von 2,35 mm aufweisen, ist der abgeflachte Bereich in der Regel klein, so dass nur geringe Antriebsmomente von der Antriebsvorrichtung auf das Dentalinstrument übertragen werden können.

Aus der CH 706 593 A1 ist eine Bohrvorrichtung für die Chirurgie bekannt, bestehend aus einem Bohrer und einer auf den Bohrer anzuordnenden Stopperhülse. Der Bohrer hat einen sich nach basal erstreckenden Schaft und einen sich axial vom Schaft nach apikal erstreckenden Schneideteil, wobei der Schaft an seinem koronalen Ende eine genormte Dentalkupplung hat, welche zum Ankuppeln an ein zahnärztliches Handstück dient. Die genormte Dentalkupplung wird durch einen abgeflachten Bereich zur radialen Sicherung sowie durch eine umlaufende Nut zur axialen Sicherung in der Antriebsvorrichtung gebildet. Weiterhin weist die Bohrvorrichtung mindestens eine sich in axialer Richtung entlang der gesamten Bohrvorrichtung erstreckende kreisabschnittsförmige Nut auf, die zur Führung und zur Verdrehsicherung der Stopperhülse dient. Die Stopperhülse kann auf dem Bohrer frei positioniert werden, um einen Anschlag für die Bohrtiefe zu bilden. Nachteilig wird bei dieser Bohrvorrichtung das Drehmoment von einer Antriebsvorrichtung lediglich über den abgeflachten Bereich an der Dentalkupplung übertragen, sodass nur ein relativ geringes Drehmoment übertragbar ist.

Aufgabe der vorliegenden Erfindung ist es, ein Dentalinstrument mit einem Schaftdurchmesser von 1,5 bis 2,5 mm, insbesondere 2,35mm, bereitzustellen, welches mit der Antriebsvorrichtung für die gattungsgemäßen Dentalinstrumente betrieben werden kann, d.h. zu diesen kompatibel ist, jedoch gleichzeitig dafür ausgebildet ist, mit einem höheren Antriebsmoment angetrieben werden zu können.

Diese Aufgabe wird vorteilhaft dadurch gelöst, dass die mindestens eine Längsnut sich ausschließlich im Bereich des Schafts erstreckt und zur in Umfangsrichtung formschlüssigen Aufnahme von dem mindestens einen Vorsprung der Antriebsvorrichtung bzw. des Adapters ausgebildet ist. Über formschlüssig in die mindestens eine Längsnut eingreifende Vorsprünge einer erfindungsgemäßen Antriebsvorrichtung oder eines Adapters, welcher in eine herkömmliche Antriebsvorrichtung einsteckbar ist, können größere Antriebsmomente auf das erfindungsgemäße Dentalinstrument übertragen werden. Somit können zum Beispiel auch Gewinde in Knochen geschnitten oder aber auch Schraubverbindungen mit entsprechend hohem Drehmoment angezogen werden.

Je nachdem wie lang die Längsnuten ausgebildet sind, können mehr oder weniger hohe Antriebsmomente auf das Dentalinstrument übertragen werden.

Durch das Vorsehen der Längsnuten in dem Schaftbereich bleibt das Dentalinstrument kompatibel zu gattungsgemäßen Antriebsvorrichtungen für gattungsgemäße Dentalinstrumente.

Der Querschnitt einer Längsnut kann vorteilhaft kreissegmentförmig ausgebildet sein, es ist jedoch auch möglich, dass die Längsnut eine Bodenwandung und zwei angrenzende Seitenwandungen aufweist.

Vorteilhaft weist das Dentalinstrument mehr als eine Längsnut auf. So können zwei, drei oder mehrere Längsnuten parallel zueinander und um den Umfang des Endbereichs herum in der Mantelfläche angeordnet sein. Dabei sind die mehreren Längsnuten vorteilhaft gleichmäßig um den Umfang des Endbereiches herum verteilt angeordnet, so dass das Dentalinstrument nicht nur in einer sondern in mehreren Stellungen in die Antriebsvorrichtung bzw. den Adapter einsetzbar ist.

Der Schaft des Dentalinstrumentes ist rotationssymmetrisch ausgebildet, d.h. im Querschnitt kreisförmig, wobei in die im Querschnitt kreisförmige Mantelfläche des Endbereichs des Schaftes die mindestens eine Längsnut eingearbeitet bzw. angeordnet ist/sind.

Je nach Durchmesser des Schaftes des Dentalinstruments können die Längsnuten eine Nutentiefe eine unterschiedliche Tiefe aufweisen. Bei Schaftdurchmessern von 2 bis 2,5 mm können die Nuten eine Tiefe von 0,1 mm bis 0,7 mm aufweisen. Je tiefer und Länger die Längsnut ist, desto höhere Antriebskräfte können auf das Dentalinstrument übertragen werden.

Das Dentalinstrument kann in seinem abgeflachten Bereich eine umlaufende Nut aufweisen, um kompatibel mit bestehenden Antriebsvorrichtungen zu sein.

Es wird ebenso ein Adapter für ein erfindungsgemäßes Dentalinstrument zur Verbindung mit einer Antriebsvorrichtung beansprucht, welcher mit seinem einen Ende in die Antriebsvorrichtung, welche insbesondere eine Antriebsvorrichtung für gattungsgemäße Dentalinstrumente ist, einsetzbar ist und dessen anderes Ende eine Aufnahme zumindest für den Endbereich des Schafts des erfindungsgemäßen Dentalinstruments bildet und mindestens einen mit der mindestens einen Längsnut des Dentalinstruments korrespondierenden Vorsprung aufweist.

Die Aufnahme weist eine Innenwandung auf, welche sich in axialer Richtung erstreckende Anlageflächen bildet, die zur Anlage an die Mantelfläche des Endbereiches dienen. Das heißt, sie liegen an den Zwischenbereichen der Längsnuten zumindest teilweise an. Ferner weist die Innenwandung korrespondierend zur Anzahl der Längsnuten radial nach innen ragende Vorsprünge auf, die zum formschlüssigen Eingriff in die Längsnuten des Dentalinstrumentes dienen.

Die Vorsprünge erstrecken sich dabei in entsprechender Länge zu den Längsnuten in axialer Richtung, wobei ihre Querschnittsform derer der Längsnuten entspricht.

Damit das Dentalinstrument leichter in die Aufnahme einbringbar bzw. einsteckbar ist, können die Vorsprünge an ihren der Öffnung zugewandten Enden abgeschrägt oder abgerundet sein.

Die Vorsprünge sind entsprechend der Längsnuten um den Umfang der Innenwandung herum anzuordnen, insbesondere gleichmäßig um den Umfang herum.

Damit ein möglichst guter Formschluss zwischen den Vorsprüngen und den Längsnuten realisierbar ist, ist die radiale Höhe der Vorsprünge an die Tiefe der Längsnuten angepasst.

Die vorbeschriebene Aufnahme des Adapters kann auch analog bei einer erfindungsgemäßen Antriebsvorrichtung zur Aufnahme des erfindungsgemäßen Dentalinstrumentes vorgesehen sein.

Nachfolgend wird anhand von Zeichnungen eine mögliche Ausführungsform des Dentalinstrumentes sowie eines Adapters näher erläutert.

Es zeigen:
- Fig. 1:: Perspektivische Ansicht des erfindungsgemäßen Dentalinstruments;
- Fig. 2:: Detailansicht des Dentalinstruments nach Figur 1;
- Fig. 3:: stirnseitige Ansicht des Dentalinstruments nach Figur 1 und 2;
- Fig. 4:: Seitenansicht auf den Endbereich des Dentalinstruments nach einem der Figuren 1 bis 3;
- Fig. 5:: perspektivische Ansicht eines erfindungsgemäßen Adapters;
- Fig. 6:: Seitenansicht des Adapters gemäß Figur 5;
- Fig. 7:: stirnseitige Ansicht des Adapters nach Figur 5 und 6;
- Fig. 8:: perspektivische Ansicht des Adapters nach den Figuren 5 bis 7;
- Fig. 9:: gattungsgemäßes Dentalinstrument.

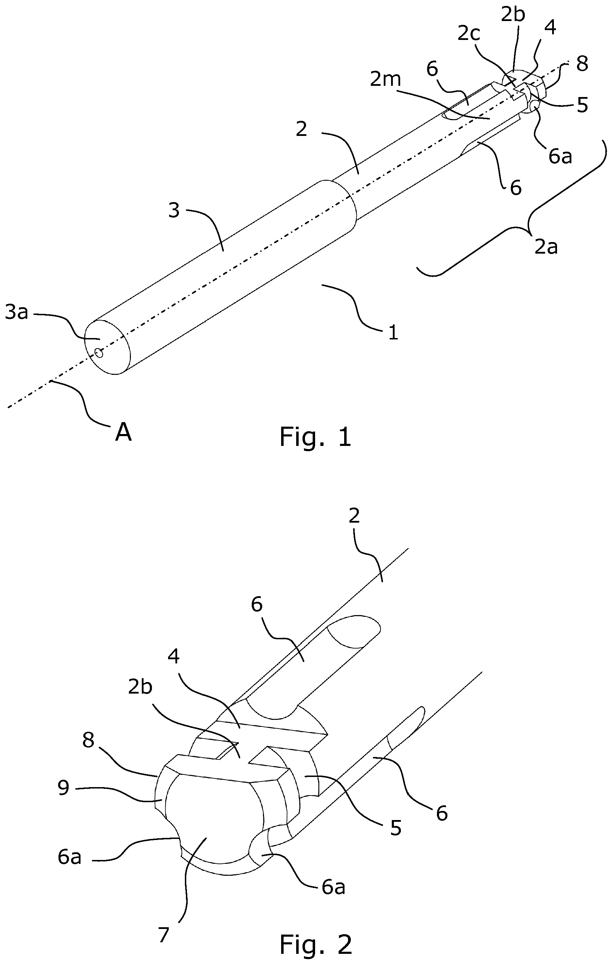

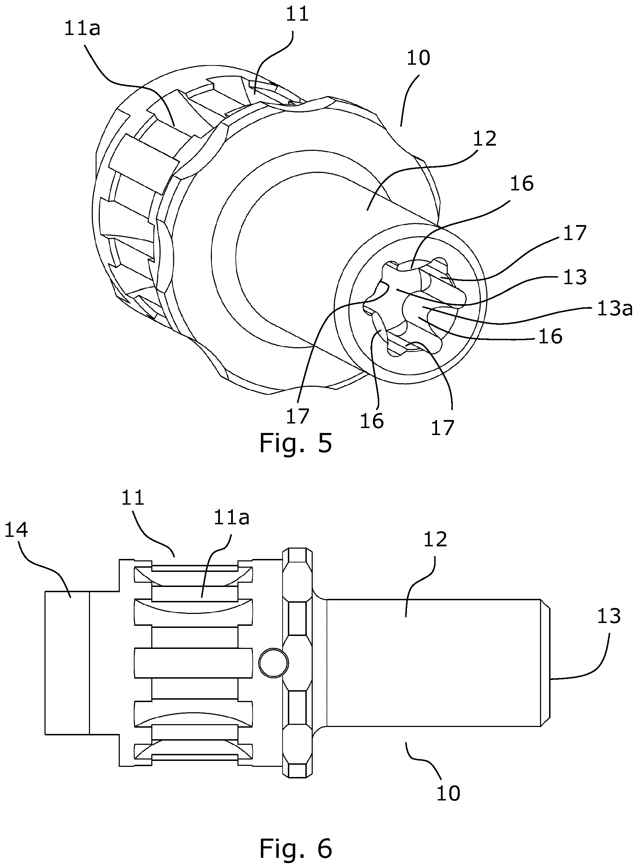

Die Figur 1 zeigt eine perspektivische Ansicht des erfindungsgemäßen Dentalinstruments 1. Das Dentalinstrument 1 weist einen Schaft 2 auf, mit dessen Ende es in eine Antriebsvorrichtung oder einen Adapter 10, wie er in den Figuren 5 bis 8 dargestellt und beschrieben ist, einsteckbar ist. An den Schaft 2 schließt sich ein Arbeitskopf 3 an, der z.B. Schneiden zum Bohren, Fräsen oder Gewindeschneiden aufweisen kann. Ebenso ist es möglich, dass der Kopf mit abrasiven Elementen, wie z.B. Diamantsplittern, besetzt ist. Auch ist es möglich, dass der Arbeitskopf als Schraubendreher z.B. für Kreuz-, Schlitz, Torx-, Inbus oder Vierkantschrauben ausgebildet ist. Das Dentalinstrument 1 weist eine Rotationsachse A auf, um die es herum angetrieben wird. Der Schaft 2 weist einen Endbereich 2a auf, über dessen Länge sich Längsnuten 6 erstrecken, welche in die zylindrische Mantelfläche 2m eingearbeitet oder eingeformt sind. Es ist jedoch ebenso im Sinne der Erfindung, wenn nur eine Längsnut in der Mantelfläche 2m vorgesehen ist.

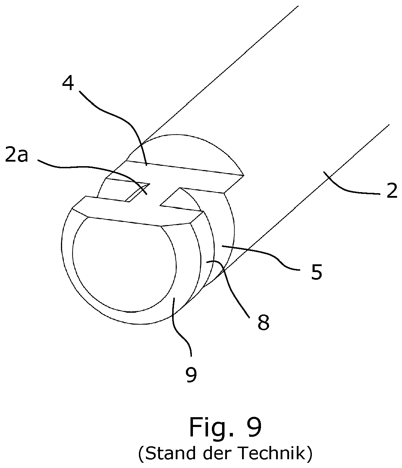

Das Ende 2b des Endbereiches 2a ist seitlich abgeflacht, wie dies bereits bei einem gattungsgemäßen Dentalinstrument, wie es beispielhaft in Figur 9 dargestellt ist, vorbekannt ist. Der Bereich 2b weist noch eine umlaufende Nut 5 auf, damit das Dentalinstrument kompatibel zu einer herkömmlichen Antriebsvorrichtung ist. Es ist jedoch nicht zwingend erforderlich, dass die Nut 5 vorgesehen ist.

Wie in Figur 2 vergrößert dargestellt, erstrecken sich die Längsnuten 6 bis zum Ende 7 des Schafts 2. Die radiale Tiefe der Längsnuten ist bei allen Längsnuten gleich, so dass das Dentalinstrument in mehreren Stellungen, deren Anzahl der Anzahl von Längsnuten entspricht, in die Antriebsvorrichtung bzw. den Adapter einsteckbar ist. Die Tiefe der Längsnuten 6 kann dabei kleiner oder gleich der Tiefe der seitlichen Abflachung 4 des Bereiches 2b sein. In dem dargestellten Beispiel ist die radiale Tiefe der Längsnuten 6 kleiner als die radiale Tiefe der seitlichen Abflachung 4. Das Ende 7 des Schafts 2 weist eine umlaufende Fase 9 auf, so dass das Dentalinstrument 1 leichter in die Aufnahme des Adapters bzw. einer Antriebsvorrichtung einsetzbar ist.

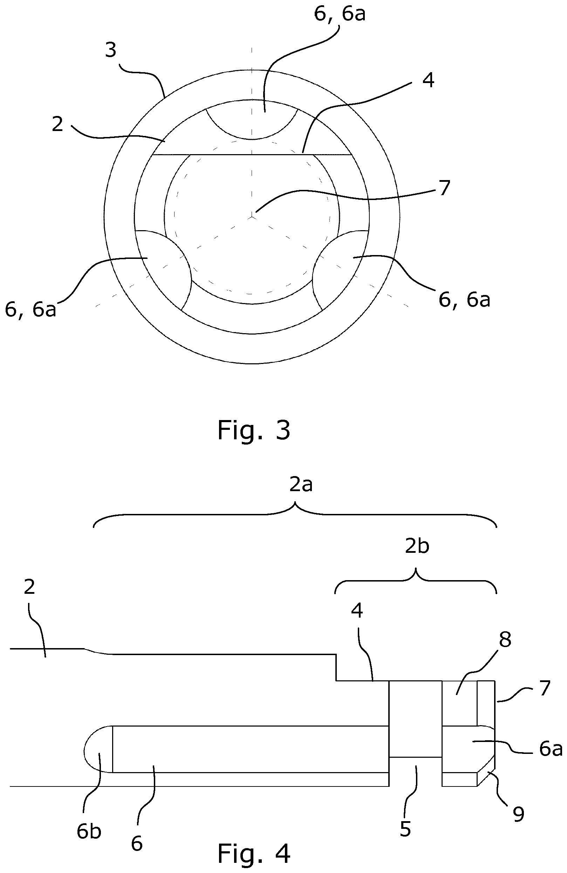

Die Figur 3 zeigt eine stirnseitige Ansicht des Dentalinstruments 1 gemäß der Figuren 1 und 2. Die Figur 4 zeigt eine Seitenansicht auf den Endbereich 2a des Dentalinstruments 1 nach einer der Figuren 1 bis 3.

Die Figur 5 zeigt eine perspektivische Ansicht eines erfindungsgemäßen Adapters 10. Dessen Bereiche 14, 11 sind zum Einsatz in eine nicht dargestellte Antriebsvorrichtung ausgebildet. Der Bereich 11 weist eine Außenkontur 11a auf, die zum formschlüssigen Antrieb des Adapters 10 durch die Antriebsvorrichtung dient. An den Bereich 11 schließt sich ein Bereich 12 an, der einer Aufnahme 13 für ein erfindungsgemäßes Dentalinstrument 1 dient.

Die Aufnahme 13 weist eine Innenwandung 13a auf, welche Anlageflächen 17 sowie sich radial nach innen und axial erstreckende Vorsprünge 16 aufweist bzw. bildet. Die Anlageflächen 17 dienen zur Anlage an die Mantelfläche 2m des Dentalinstrumentes 1. Die Vorsprünge 16 dienen zum formschlüssigen Eingriff in die Längsnuten 6 des Dentalinstrumentes 1. Der Querschnitt der Vorsprünge und ihre radiale Höhe sind dabei der Form und Tiefe der Längsnuten angepasst.

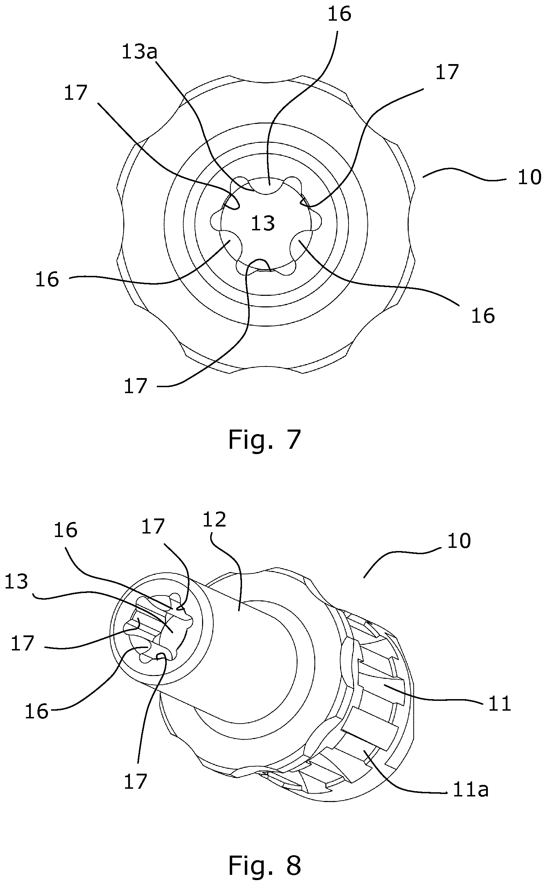

Die Figur 6 zeigt eine Seitenansicht des Adapters gemäß Figur 5, die Figur 7 eine stirnseitige Ansicht und die Figur 8 eine perspektivische Ansicht des Adapters nach den Figuren 5 bis 7.

Die Figur 9 zeigt ein gattungsgemäßes Dentalinstrument mit einem Schaft 2, dessen Ende eine seitliche Abflachung 4 und eine umlaufende Nut 5 aufweist.

## Patentansprüche

1. Dentalinstrument (1) zur Verbindung mit einer bzw. einem mindestens einen Vorsprung (16) aufweisenden Antriebsvorrichtung oder Adapter (10) mit einem in die Antriebsvorrichtung oder den Adapter (10) einspannbaren Schaft (2) sowie mit einem Arbeitskopf (3), der insbesondere Schneiden und/oder mindestens eine abrasive Oberfläche aufweist oder als Schraubendreher ausgebildet ist, wobei das Dentalinstrument (1) eine Rotationsachse (A) aufweist und der Schaft (2) an seinem dem Kopf (3) abgewandten Endbereich (2a) einen seitlich abgeflachten Bereich (2b) und eine Mantelfläche (2m) aufweist, und wobei die Mantelfläche (2m) mindestens eine sich in axialer Richtung erstreckende Längsnut (6) aufweist, **dadurch gekennzeichnet, dass** die mindestens eine Längsnut (6) sich ausschließlich im Bereich des Schafts (2) erstreckt und zur in Umfangsrichtung formschlüssigen Aufnahme von dem mindestens einen Vorsprung (16) der Antriebsvorrichtung bzw. des Adapters (10) ausgebildet ist.

2. Dentalinstrument (1) nach Anspruch 1, **dadurch gekennzeichnet, dass** der Querschnitt einer Längsnut (6) kreissegmentförmig oder rechteckig ist.

3. Dentalinstrument (1) nach Anspruch 1 oder 2, **dadurch gekennzeichnet, dass** zwei, drei oder mehrere Längsnuten (6) parallel zueinander und insbesondere gleichmäßig um den Umfang des Endbereichs (2a) herum in der Mantelfläche (2m) angeordnet sind.

4. Dentalinstrument (1) nach einem der Ansprüche 1 bis 3, **dadurch gekennzeichnet, dass** der Schaft (2) rotationssymmetrisch ist, d.h. im Querschnitt kreisförmig ist und einen Durchmesser von 1,5 bis 2,5mm, bevorzugt 2,35mm aufweist, und wobei in die Mantelfläche (2m) des Endbereichs (2a) die Längsnuten (6) eingearbeitet bzw. angeordnet sind.

5. Dentalinstrument (1) nach einem der Ansprüche 1 bis 4, **dadurch gekennzeichnet, dass** die Längsnuten (6) eine Nutentiefe von 0,1 mm bis 0,7 mm aufweisen.

6. Dentalinstrument (1) nach einem der vorhergehenden Ansprüche, **dadurch gekennzeichnet, dass** im abgeflachten Bereich (2b) eine umlaufende Nut (5) angeordnet ist.

7. Adapter (10) mit einem Dentalinstrument (1) nach einem der vorhergehenden Ansprüche zur Verbindung mit einer Antriebsvorrichtung, **dadurch gekennzeichnet, dass** der Adapter (10) mit seinem einen Ende (14, 11) in die Antriebsvorrichtung einsetzbar ist und sein anderes Ende (12) eine Aufnahme (13) zumindest für den Endbereich (2a) des Schafts (2) des Dentalinstruments (1) bildet und mindestens einen mit der mindestens einen Längsnut (6) des Dentalinstruments (1) korrespondierenden Vorsprung (16) aufweist.

8. Adapter (10) nach Anspruch 7, **dadurch gekennzeichnet, dass** die Aufnahme (13) eine Innenwandung (13a) aufweist, welche sich in axialer Richtung erstreckende Anlageflächen (17) bildet, die zur Anlage an die Mantelfläche (2m) des Endbereiches (2a) dienen, und dass korrespondierend zu der Anzahl von Längsnuten (6) die Innenwandung (13a) radial nach innen ragende Vorsprünge (16) bildet, die zum formschlüssigen Eingriff in die Längsnuten (6) dienen.

9. Adapter (10) nach Anspruch 8, **dadurch gekennzeichnet, dass** die Vorsprünge (16) sich in axialer Richtung erstrecken und ihre Querschnittsform derer der Längsnuten (6) entspricht.

10. Adapter (10) nach Anspruch 8 oder 9, **dadurch gekennzeichnet, dass** die Vorsprünge (16) an ihren der Öffnung (13b) zugewandten Enden (16a) abgeschrägt oder abgerundet sind und/oder die Vorsprünge (16) gleichmäßig um den Umfang herum an der Innenwandung (13a) angeordnet sind.

11. Adapter (10) nach einem der Ansprüche 8 bis 10, **dadurch gekennzeichnet, dass** die Vorsprünge (16) mehr als 0,1 mm bis 0,7 mm radial weiter nach innen reichen als die Anlageflächen (17).

12. Antriebsvorrichtung mit einem Dentalinstrument (1) nach einem der Ansprüche 1 bis 6, **dadurch gekennzeichnet, dass** die Antriebsvorrichtung eine Aufnahme zumindest für den Bereich (2a) des Schafts (2) des Dentalinstruments (1) bildet und mindestens einen mit der mindestens einen Längsnut (6) des Dentalinstruments (1) korrespondierenden Vorsprung aufweist.

13. Antriebsvorrichtung nach Anspruch 12, **dadurch gekennzeichnet, dass** die Aufnahme eine Innenwandung aufweist, welche sich in axialer Richtung erstreckende Anlageflächen bildet, die zur Anlage an die Mantelfläche (2m) des Endbereiches (2a) dienen, und dass korrespondierend zu der Anzahl von Längsnuten (6) die Innenwandung radial nach innen ragende Vorsprünge bildet, die zum formschlüssigen Eingriff in die Längsnuten (6) dienen.

14. Antriebsvorrichtung nach Anspruch 13, **dadurch gekennzeichnet, dass** die Vorsprünge sich in axialer Richtung erstrecken und ihre Querschnittsform derer der Längsnuten (6) entspricht, insbesondere an ihren der Öffnung zugewandten Enden abgeschrägt oder abgerundet sind.

15. Antriebsvorrichtung nach einem der Ansprüche 13 bis 14, **dadurch gekennzeichnet, dass** die Vorsprünge gleichmäßig um den Umfang herum an der Innenwandung angeordnet sind und/oder die Vorsprünge mehr als 0,1 mm bis 0,7 mm radial nach innen reichen als die Anlageflächen.

## Claims

1. Dental instrument (1) for connection with a drive device or adapter (10) having at least one projection (16), having a shaft (2) clampable in the drive device or the adapter (10), and a working head (3), in particular having cutting edges or an abrasive surface or being configured as a screwdriver, wherein the dental instrument (1) has a rotational axis (A) and the shaft (2) on its end region (2a) facing away from the head (3) has a laterally flattened region (2b) and a lateral surface (2m), and wherein the lateral surface (2m) has a longitudinal groove (6) extending in the axial direction, **characterised in that** the at least one longitudinal groove (6) extends exclusively in the region of the shaft (2) and is configured for the positive-fit mounting in the circumferential direction of the at least one projection (16) of the drive device or the adapter (10).

2. Dental instrument (1) according to claim 1, **characterised in that** the cross-section of a longitudinal groove (6) is circular or rectangular.

3. Dental instrument (1) according to claim 1 or
2, **characterised in that** two, three or more longitudinal grooves (6) are arranged parallel to each other and in particular evenly around the circumference of the end region (2a) in the lateral surface (2m).

4. Dental instrument (1) according to any one of claims 1 to 3, **characterised in that** the shaft (2) is rotationally symmetrical, i.e. has a circular cross-section and a diameter of 1.5 to 2.5 mm, preferably 2.35 mm, and wherein the longitudinal grooves (6) are incorporated into or arranged on the lateral surface (2m) of the end region (2a).

5. Dental instrument (1) according to any one of claims 1 to 4, **characterised in that** the longitudinal grooves (6) have a groove depth of 0.1 mm to 0.7 mm.

6. Dental instrument (1) according to any one of the preceding claims, **characterised in that** a circumferential groove (5) is arranged in the flattened region (2b).

7. Adapter (10) for a dental instrument (1) according to any one of the preceding claims, **characterised in that** the adapter (10) with its one end (14, 11) can be inserted in the drive device and with its other end (12) forming a mount (13) at least for the end region (2a) of the shaft (2) of the dental instrument (1) and has at least one projection (16) corresponding to the at least one longitudinal groove (6) of the dental instrument (1).

8. Adapter (10) according to claim 7, **characterised in that** the mount (13) has an inner wall (13a), forming contact surfaces (17) extending in the axial direction, serving to make contact with the lateral surface (2m) of the end region (2a), and **in that** corresponding to the number of longitudinal grooves (6) the inner wall (13a) forms projections (16) protruding radially inwards, serving for positive-fit engagement in the longitudinal grooves (6).

9. Adapter (10) according to claim 8, **characterised in that** the projections (16) extend in the axial direction and their cross-sectional form corresponds to that of the longitudinal grooves (6).

10. Adapter (10) according to either claim 8 or
9, **characterised in that** the projections (16) are tapered or rounded at their ends (16a) facing the opening (13b) and/or the projections (16) are arranged evenly around the circumference of the inner wall (13a).

11. Adapter (10) according to any one of claims 8 to 10, **characterised in that** the projections (16) protrude radially further inwards by more than 0.1 mm to 0.7 mm than the contact surfaces (17).

12. Drive device for a dental instrument (1) according to any one of claims 1 to 6, **characterised in that** the drive device forms a mount at least for the end region (2a) of the shaft (2) of the dental instrument (1) and has at least one projection corresponding to the at least one longitudinal groove (6) of the dental instrument (1).

13. Drive device according to claim 12, **characterised in that** the mount has an inner wall, forming contact surfaces extending in the axial direction, serving to make contact with the lateral surface (2m) of the end region (2a), and **in that** corresponding to the number of longitudinal grooves (6) the inner wall forms projections protruding radially inwards, serving for positive-fit engagement in the longitudinal grooves (6).

14. Drive device according to claim 13, **characterised in that** the projections extend in the axial direction and their cross-sectional form corresponds to that of the longitudinal grooves (6), and in particular at their ends facing the opening are tapered or rounded.

15. Drive device according to either of claims 13 or 14, **characterised in that** the projections are arranged evenly around the circumference on the inner wall and/or the projections protrude radially further inwards by more than 0.1 mm to 0.7 mm than the contact surfaces.

## Revendications

1. Instrument dentaire (1) destiné à être connecté à un dispositif d'entraînement ou un adaptateur (10) possédant au moins une partie saillante (16), comprenant une tige (2) qui peut être serrée dans le dispositif d'entraînement ou dans l'adaptateur (10) et comprenant aussi une tête de travail (3), laquelle possède notamment des taillants et/ou au moins une surface abrasive ou est réalisée sous la forme d'un tournevis, l'instrument dentaire (1) possédant un axe de rotation (A) et la tige (2) possédant, au niveau de sa zone d'extrémité (2a) à l'opposé de la tête (3), une zone (2b) aplatie latéralement et une surface enveloppante (2m), et la surface enveloppante (2m) possédant au moins une rainure longitudinale (6) qui s'étend dans la direction axiale, **caractérisé en ce que** l'au moins une rainure longitudinale (6) s'étend uniquement dans la zone de la tige (2) et est configurée pour être accueillie par complémentarité de formes dans la direction circonférentielle par l'au moins une partie saillante (16) du dispositif d'entraînement ou de l'adaptateur (10).

2. Instrument dentaire (1) selon la revendication 1, **caractérisé en ce que** la section transversale d'une rainure longitudinale (6) est en forme de segment de cercle ou rectangulaire.

3. Instrument dentaire (1) selon la revendication 1 ou 2, **caractérisé en ce que** deux rainures longitudinales (6) ou plus sont disposées en parallèle les unes des autres et notamment de manière régulière autour du pourtour de la zone d'extrémité (2a) dans la surface enveloppante (2m).

4. Instrument dentaire (1) selon l'une des revendications 1 à 3, **caractérisé en ce que** la tige (2) est à symétrie de rotation, c'est-à-dire avec une section transversale circulaire, et possède un diamètre de 1,5 à 2,5 mm, de préférence de 2,35 mm, et les rainures longitudinales (6) étant incorporées ou disposées dans la surface enveloppante (2m) de la zone d'extrémité (2a).

5. Instrument dentaire (1) selon l'une des revendications 1 à 4, **caractérisé en ce que** les rainures longitudinales (6) possèdent une profondeur de rainure de 0,1 mm à 0,7 mm.

6. Instrument dentaire (1) selon l'une des revendications précédentes, **caractérisé en ce qu'**une rainure circonférentielle (5) est disposée dans la zone aplatie (2b).

7. Adaptateur (10) comprenant un instrument dentaire (1) selon l'une des revendications précédentes destiné à être connecté à un dispositif d'entraînement, **caractérisé en ce que** l'adaptateur (10) peut être inséré dans le dispositif d'entraînement par l'une de ses extrémités (14, 11) et son autre extrémité (12) forme un logement (13) au moins pour la zone d'extrémité (2a) de la tige (2) de l'instrument dentaire (1) et possède au moins une partie saillante (16) qui correspond à l'au moins une rainure longitudinale (6) de l'instrument dentaire (1).

8. Adaptateur (10) selon la revendication 7, **caractérisé en ce que** le logement (13) possède une paroi interne (13a) qui forme des surfaces d'appui (17) s'étendant dans la direction axiale, lesquelles servent à venir en appui contre la surface enveloppante (2m) de la zone d'extrémité (2a), et **en ce que** la paroi interne (13a), en correspondance au nombre de rainures longitudinales (6), forme des parties saillantes (16) faisant saillie vers l'intérieur qui servent à venir en prise par complémentarité de formes dans les rainures longitudinales (6).

9. Adaptateur (10) selon la revendication 8, **caractérisé en ce que** les parties saillantes (16) s'étendent dans la direction axiale et la forme de leur section transversale correspond à celle des rainures longitudinales (6).

10. Adaptateur (10) selon la revendication 8 ou 9, **caractérisé en ce que** les parties saillantes (16) sont biseautées ou arrondies au niveau de leurs extrémités (16a) qui font face à l'ouverture (13b) et/ou les parties saillantes (16) sont disposées de manière régulière autour du pourtour au niveau de la paroi interne (13a).

11. Adaptateur (10) selon l'une des revendications 8 à 10, **caractérisé en ce que** les parties saillantes (16) portent radialement vers l'intérieur sur 0,1 mm à 0,7 mm de plus que les surfaces d'appui (17).

12. Dispositif d'entraînement comprenant un instrument dentaire (1) selon l'une des revendications 1 à 6, **caractérisé en ce que** le dispositif d'entraînement forme un logement au moins pour la zone (2a) de la tige (2) de l'instrument dentaire (1) et possède au moins une partie saillante qui correspond à l'au moins une rainure longitudinale (6) de l'instrument dentaire (1).

13. Dispositif d'entraînement selon la revendication 12, **caractérisé en ce que** le logement possède une paroi interne qui forme des surfaces d'appui s'étendant dans la direction axiale, lesquelles servent à venir en appui contre la surface enveloppante (2m) de la zone d'extrémité (2a), et **en ce que** la paroi interne, en correspondance au nombre de rainures longitudinales (6), forme des parties saillantes faisant saillie vers l'intérieur qui servent à venir en prise par complémentarité de formes dans les rainures longitudinales (6).

14. Dispositif d'entraînement selon la revendication 13, **caractérisé en ce que** les parties saillantes s'étendent dans la direction axiale et la forme de leur section transversale correspond à celle des rainures longitudinales (6), en étant notamment biseautées ou arrondies au niveau de leurs extrémités qui font face à l'ouverture.

15. Dispositif d'entraînement selon l'une des revendications 13 à 14, **caractérisé en ce que** les parties saillantes sont disposées de manière régulière autour du pourtour au niveau de la paroi interne et/ou les parties saillantes portent radialement vers l'intérieur sur 0,1 mm à 0,7 mm de plus que les surfaces d'appui.
